(19) Europäisches Patentamt
European Patent Office
Office européen des brevets

(11) EP 4 056 598 B1

(12) **EUROPEAN PATENT SPECIFICATION**

(45) Date of publication and mention of the grant of the patent:
**13.09.2023 Bulletin 2023/37**

(21) Application number: **21161496.1**

(22) Date of filing: **09.03.2021**

(51) International Patent Classification (IPC):
***C08F 2/00*** *(2006.01)* ***C08F 210/16*** *(2006.01)*
***C08J 5/18*** *(2006.01)* ***C08L 23/08*** *(2006.01)*
***C08F 4/659*** *(2006.01)*

(52) Cooperative Patent Classification (CPC):
(C-Sets available)
**C08J 5/18; C08L 23/0815;** C08F 4/65912; C08F 4/65916; C08F 210/16; C08L 2203/16; C08L 2205/025; C08L 2205/03; C08L 2308/00; C08L 2314/06 (Cont.)

(54) **POLYETHYLENE COMPOSITION FOR A FILM LAYER**

POLYETHYLENZUSAMMENSETZUNG FÜR EINE FOLIENSCHICHT

COMPOSITION DE POLYÉTHYLÈNE POUR UNE COUCHE DE FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.09.2022 Bulletin 2022/37**

(73) Proprietor: **Borealis AG**
**1020 Vienna (AT)**

(72) Inventors:
- **WANG, Jingbo**
  **4021 Linz (AT)**
- **BERGER, Friedrich**
  **4021 Linz (AT)**
- **AHO, Jani**
  **06101 Porvoo (FI)**

(74) Representative: **Kador & Partner Part mbB**
**Corneliusstraße 15**
**80469 München (DE)**

(56) References cited:
**WO-A1-2016/083208**
**WO-A1-2016/198271**
**WO-A1-2018/095788**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6491;**
**C08F 210/16, C08F 4/65925;**
**C08L 23/0815, C08L 23/0815, C08L 23/0815;**
C08F 210/16, C08F 210/08, C08F 2500/12;
C08F 210/16, C08F 210/14, C08F 210/08, C08F 2500/05, C08F 2500/12, C08F 2500/26;
C08F 210/16, C08F 210/14, C08F 2500/08, C08F 2500/12

## Description

The present invention relates to a metallocene catalysed multimodal copolymer (P) of ethylene, to the use of the multimodal copolymer (P) of ethylene in film applications and to a film comprising the polymer composition of the invention.

Unimodal polyethylene (PE) polymers, for instance SSC products, are usually used for film application. Unimodal PE polymers have for instance good optical properties, like low haze, but for instance, the melt processing of such polymers is not satisfactory in production point of view and may cause quality problems of the final product as well. Multimodal PE polymers with two or more different polymer components are better to process, but e.g. melt homogenisation of the multimodal PE may be problematic resulting to inhomogeneous final product evidenced e.g. with high gel content of the final product.

WO 2021009189, WO 2021009190 and WO 2021009191 of Borealis disclose a process for preparing multimodal PE polymers in two loop reactors and one gas phase reactor. The polymers produced in the Examples have a total density of 938 or 939 kg/$m^3$. The $MFR_2$ (190°C, 2.16 kg, ISO 1133) of the polymer components produced in the first loop is 22 g/10 min. Film properties, especially dart drop impact (DDI) are not mentioned at all. Also WO 2021009192 discloses such a process. The polymer produced in the Examples has an even higher density of 951 kg/$m^3$. The $MFR_2$ (190°C, 2.16 kg, ISO 1133) of the polymer component produced in the first loop is 32 g/10 min. Film properties, especially dart drop impact (DDI) are again not mentioned at all.

There is a continuous need to find multimodal PE polymers with different property balances for providing tailored solutions to meet the increasing demands of the end application producers e.g. for reducing the production costs while maintaining or even improving the end product properties. Tailored polymer solutions are also needed to meet the requirements of continuously developing equipment technology in the end application field. Therefore, there is a need in the art for providing a material that provides good optical properties and mechanical properties, especially dart drop (impact strength). In other words, a material is desirable that provides a combination of good optics and mechanical properties, especially haze and dart drop to films prepared from such a material.

## Description of the invention

The present invention is therefore directed to a metallocene catalysed multimodal copolymer (P) of ethylene with at least two different comonomers selected from alpha-olefins having from 4 to 10 carbon atoms, which consists of

(i) 30.0 to 70.0 wt%, based on the multimodal copolymer (P), of an ethylene polymer component (A), comprising ethylene polymer fraction (A-1) and ethylene polymer fraction (A-2) and
(ii) 70.0 to 30.0 wt%, based on the multimodal copolymer (P), of an ethylene polymer component (B),

whereby the ethylene polymer component (A) has
a density in the range of from 920 to 950 kg/$m^3$ and an $MFR_2$ (190°C, 2.16 kg, ISO 1133) in the range of from 2.0 to 40.0 g/10 min;
the ethylene polymer fraction (A-1) has
a density in the range of from 928 to 945 kg/$m^3$ and an $MFR_2$ (190°C, 2.16 kg, ISO 1133) in the range of from 0.1 to 5.0 g/10 min;
the ethylene polymer fraction (A-2) having a density in the range of from 935 to 952 kg/$m^3$ and an $MFR_2$ and (190°C, 2.16 kg, ISO 1133) in the range of from 3.0 to 200.0 g/10 min; and
the ethylene polymer component (B) has
a density in the range of from 880 to 915 kg/$m^3$ and an $MFR_2$ (190°C, 2.16 kg, ISO 1133) in the range of from 0.01 to 1.0 g/10 min; and
whereby the multimodal copolymer (P) has

a density in the range of from 910 to 930 kg/$m^3$ and an $MFR_2$ (190°C, 2.16 kg, ISO 1133) in the range of from 1.0 to 2.0 g/10 min and
a ratio of the $MFR_2$ of ethylene polymer component (A) to the $MFR_2$ of the multimodal copolymer (P) of 5.5 up to 15.0.

Unexpectedly the multimodal copolymer (P) of the invention provides improved mechanical properties to films such as especially DDI.

The invention is therefore further directed to a film comprising at least one layer comprising the multimodal PE.

The film is characterized by a dart drop impact (DDI) determined according to ASTM D1709, method A on a 40 $\mu$m monolayer test blown film of at least 900 g up to 1700 g.

*Definitions*

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed multimodal copolymer is defined in this invention as multimodal copolymer (P) of ethylene with at least two different comonomers selected from alpha-olefins having from 4 to 10 carbon atoms, which has been produced in the presence of a metallocene catalyst.

Term "multimodal" in context of multimodal copolymer (P) of ethylene means herein multimodality with respect to melt flow rate (MFR) of the ethylene polymer components (A) and (B) as well as ethylene polymer fraction (A-1) and (A-2), i.e. the ethylene polymer components (A) and (B, as well as fractions (A-1) and (A-2) have different MFR values. The multimodal copolymer (P) can have further multimodality with respect to one or more further properties between the ethylene polymer components (A) and (B) as well as between fractions (A-1) and (A-2), as will be described later below.

The multimodal copolymer (P) of the invention as defined above, below or in claims is also referred herein shortly as "multimodal PE".

The ethylene polymer component (A) and the ethylene polymer component (B), when both mentioned, are also be referred as "ethylene polymer component (A) and (B)".

The following preferable embodiments, properties and subgroups of multimodal PE and the ethylene polymer components (A) and (B) thereof, as well as the ethylene polymer fractions (A-1) and (A-2) and the film of the invention including the preferable ranges thereof, are independently generalisable so that they can be used in any order or combination to further define the preferable embodiments of the multimodal PE and the article of the invention.

**Multimodal PE as well as ethylene polymer component (A) and (B) and ethylene polymer fractions (A-1) and (A-2)**

The metallocene catalysed multimodal copolymer (P) is referred herein as "multimodal", since the ethylene polymer component (A), including ethylene polymer fractions (A-1) and (A-2), and ethylene polymer component (B) have been produced under different polymerization conditions resulting in different Melt Flow Rates (MFR, e.g. $MFR_2$). I.e. the multimodal PE is multimodal at least with respect to difference in MFR of the ethylene polymer components (A) and (B) and/or of ethylene polymer fractions (A-1) and (A-2).

The $MFR_2$ of the ethylene polymer fractions (A-1) and (A-2) are preferably different from each other, i.e. ethylene polymer fractions (A-2) preferably has a higher $MFR_2$ than ethylene polymer fractions (A-1).

The ethylene polymer fraction (A-1) has a $MFR_2$ in the range of 0.1 to 5.0 g/10 min, preferably of 0.2 to 4.0 g/10 min, more preferably of 0.3 to 3.0 g/10 min and even more preferably of 0.4 to 2.0 g/10 min.

The ethylene polymer fraction (A-2) preferably has a $MFR_2$ higher than the ethylene polymer fraction (A-1); the $MFR_2$ of fraction (A-2) being in the range of 3.0 to 200.0 g/10 min, preferably of 10.0 to 180.0 g/10 min, more preferably of 20.0 to 150.0 g/10 min, like 30.0 to 140.0 g/10 min (provided that the $MFR_2$ is higher than the $MFR_2$ of fraction (A-1).

The $MFR_2$ of the ethylene polymer components (A) and (B) are also different from each other.

The ethylene polymer component (A) has a $MFR_2$ in the range of 2.0 to 40 g/10 min, preferably of 3.0 to 30 g/10 min, more preferably of 4.0 to 20 g/10 min, even more preferably of 5.0 to 15 g/10 min, like 7.0 to 12.0 g/10 min.

The ethylene polymer component (B) has a $MFR_2$ in the range of 0.01 to 1.0 g/10 min, preferably of 0.05 to 0.80 g/10 min, more preferably of 0.08 to 0.50 g/10 min and even more preferably of 0.10 to 0.40 g/10 min.

It is preferred the ratio of the $MFR_2$ of ethylene polymer component (A) to the $MFR_2$ of the final multimodal copolymer (P) is of 5.5 to 15.0, preferably of 6.0 to 12.0 and more preferably of 6.5 to 10.0.

The $MFR_2$ of the multimodal copolymer (P) is in the range of 1.0 to 2.0 g/10 min, preferably 1.0 to 1.5 g/10 min.

If the $MFR_2$ of ethylene polymer components, e.g. component (B), cannot be measured, because it cannot be isolated from the mixture of ethylene polymer components (A) or (B), then it can be calculated ($MI_2$ below) using so called Hagström equation (Hagström, The Polymer Processing Society, Europe/Africa Region Meeting, Gothenburg, Sweden, August 19-21, 1997):

$$MI_b = \left( w \cdot MI_1^{-\frac{w^{-b}}{a}} + (1-w) \cdot MI_2^{-\frac{w^{-b}}{a}} \right)^{-a \cdot w^b} \qquad (eq.3)$$

According to said Hagström, in said equation (eq.3), a=5.2 and b=0.7 for $MFR_2$. Furthermore, w is the weight fraction of the other ethylene polymer component, e.g. component (A), having higher MFR. The ethylene polymer component (A) can thus be taken as the component 1 and the ethylene polymer component (B) as the component 2. $MI_b$ is the $MFR_2$ of the final polymer of ethylene (1). The $MFR_2$ of the ethylene polymer component (B) ($MI_2$) can then be solved from equation 1 when the $MFR_1$ of the ethylene polymer component (A) ($MI_1$) and the final polymer of ethylene (1) ($MI_b$) are known.

In the same way, the $MFR_2$ for ethylene polymer fraction (A-2) can be calculated from $MFR_2$ (A-1), $MFR_2$ (A) and the corresponding weight ratios.

The ethylene polymer fraction (A-1) can thus be taken as the component 1 and the ethylene polymer fraction (A-2) as the component 2. $MI_b$ is the $MFR_2$ of the ethylene polymer component (A). The $MFR_2$ of the ethylene polymer fraction (A-2) ($MI_2$) can then be solved from equation 1 when the $MFR_2$ of the ethylene polymer fraction (A-1) ($MI_1$) and the ethylene polymer component (A) ($MI_b$) are known.

Naturally, in addition to multimodality with respect to, i.e. difference between, the $MFR_2$ of ethylene polymer components (A) and (B) as well as of ethylene polymer fractions (A-1) and (A-2), the multimodal PE of the invention can also be multimodal e.g. with respect to one or both of the two further properties:
multimodality with respect to, i.e. difference between,

- the comonomer type or the comonomer content(s) present in the ethylene polymer components (A) and (B), or both the type and content(s) of comonomers present in the ethylene polymer components (A) and (B), whereby the comonomer type of ethylene polymer fractions (A-1) and (A-2) is the same; and/or
- the density of the ethylene polymer components (A) and (B) and density of the ethylene polymer fractions (A-1) and (A-2).

The at least two alpha-olefin comonomers having from 4 to 10 carbon atoms of the multimodal copolymer (P) are preferably 1-butene and 1-hexene.

Preferably, the multimodal copolymer (P) is further multimodal with respect to comonomer type, i.e. the alpha-olefin comonomer having from 4 to 10 carbon atoms of ethylene polymer component (A) is different from the alpha-olefin comonomer having from 4 to 10 carbon atoms of ethylene polymer component (B), preferably wherein the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

The comonomer type for the polymer fractions (A-1) and (A-2) is the same, thus the same alpha-olefin comonomer having from 4 to 10 carbon atoms is used for fraction (A-1) and (A-2), more preferably both fractions therefore have 1-butene as comonomer.

Even more preferably the multimodal polymer of ethylene of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 920 to 950 kg/$m^3$, preferably of 930 to 945 kg/$m^3$ and/or the density of the ethylene polymer component (B) is of in the range of 880 to 915 kg/$m^3$, preferably of 890 to 905 kg/$m^3$.

The polymer fractions (A-1) has a density in the range of from 928 to 945 kg/$m^3$, preferably of 930 to 943 kg/$m^3$. The density of the polymer fraction (A-2) is in the range of from 935 to 952 kg/$m^3$, preferably of 940 to 950 kg/$m^3$.

The metallocene catalysed multimodal copolymer (P) is preferably a linear low density polyethylene (LLDPE), which has a well known meaning.

The density of the multimodal copolymer (P) is in the range of 910 to 930 kg/$m^3$. Preferably, the density is at least 912 kg/$m^3$, more preferably at least 915 kg/$m^3$. The upper limit of the density preferably is 928 kg/$m^3$, more preferably 926 kg/$m^3$, even more preferably 924 kg/$m^3$.

More preferably, the multimodal copolymer (P) is multimodal at least with respect to, i.e. has a difference between, the $MFR_2$ and the comonomer type, as well as with respect to, i.e. has a difference between, the density of the ethylene polymer components (A) and (B), respectively at least with respect to, i.e. has a difference between, the $MFR_2$ of the fractions (A-1) and (A-2), as defined above, below or in the claims including any of the preferable ranges or embodiments of the polymer composition.

It is within the scope of the invention, that the first and the second ethylene polymer fraction (A-1) and A-2) of

the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the multimodal copolymer (P), preferably in an amount of 31.0 to 55.0 wt% and even more preferably in an amount of 32.0 to 45.0 wt%.

Thus, the ethylene polymer component (B) is present in an amount of 70.0 to 30.0 wt% based on the multimodal copolymer (P), preferably in an amount of 69.0 to 45.0 wt% and more preferably in an amount of 68.0 to 55.0 wt%.

The metallocene catalysed multimodal copolymer (P), can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable metallocene catalysed multimodal copolymer (P) can be found in these references.

A suitable process is the Borstar PE 3G process.

The metallocene catalysed multimodal copolymer (P) according to the present invention is therefore preferably produced in a loop loop gas cascade. Such polymerization steps may be preceded by a prepolymerization step. A prepolymerization step is no main polymerization step in the sense of to this invention. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1.0 to 5.0 wt% in respect to the final metallocene catalysed multimodal copolymer (P). This can counted as part of the first ethylene polymer component (A).

*Catalyst*

The metallocene catalysed multimodal copolymer (P) used in the process of the invention is one made using a metallocene catalyst. A metallocene catalyst comprises a metallocene complex and a cocatalyst. It is preferred if the metallocene complex comprises an element of a group (IV) metal coordinated to at least one, preferably at least two cyclopentadienyl type ligands.

The cyclopentadienyl type group ligand has been widely described in the scientific and patent literature for about twenty years. Essentially any ligand containing the general structure:

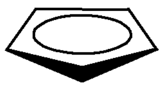

can be employed herein.

The cyclopentadienyl type ligand can be an unsubstituted or substituted and/or fused cyclopentadienyl ligand, e.g. substituted or unsubstituted cyclopentadienyl, substituted or unsubstituted indenyl, substituted or unsubstituted tetrahydroindenyl or substituted or unsubstituted fluorenyl ligand.

Suitable ligands therefore include:

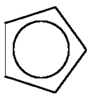

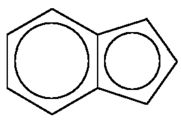

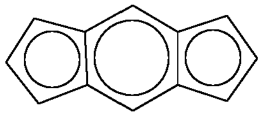 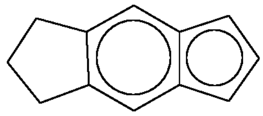

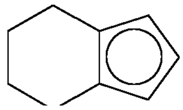

which can obviously be substituted. The metallocene complex preferably does not comprise a single cyclopentadienyl type ligand. Preferably, two such cyclopentadienyl type ligands are present, optionally joined by a bridging group. The substitution pattern on the two ligands may be the same or different. Metallocene complexes of use in this invention can therefore be symmetrical or asymmetrical.

The two cyclopentadienyl ligands of the present invention can be bridged or unbridged as is well known in the art. It is generally envisaged that the principles of this invention can be applied to any bis-cyclopentadienyl type ligand system.

The metallocene complex will comprise at least one metal ion of group (IV) as is well known. This will be η-bonded to the cyclopentadienyl type rings. Such η-bonded metals are typically Zr, Hf or Ti, especially Zr or Hf.

In a preferred embodiment, the metallocene complex is a compound of formula (I)

$$(Cp)_2R_nMX_2 \qquad (I)$$

wherein:

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;
R is a bridge of 1-7 atoms, e.g. 1 to 2 atoms;
X is a sigma ligand;
n is 0 or 1;
M is a transition metal of Group 4, e.g. Ti, Zr or Hf, especially Zr or Hf.

In a preferred embodiment, the metallocene complex is a compound of formula (I)

$$(Cp)_2R_nMX_2 \qquad (I)$$

wherein:

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;

the optional one or more substituent(s) being independently selected preferably from halogen, hydrocarbyl (e.g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl), $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, $-SiR''_3$, $-OSiR''_3$, $-SR''$, $-PR''_2$, OR" or $-NR''_2$,

each R" is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl; or e.g. in case of $-NR''_2$, the two substituents R" can form a ring, e.g. five- or six-membered ring, together with the nitrogen atom to which they are attached;

R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as $C_1$-$C_{20}$-alkyl, tri($C_1$-$C_{20}$-alkyl)silyl, tri($C_1$-$C_{20}$-alkyl)siloxy or $C_6$-$C_{20}$-aryl substituents); or a bridge of 1-3, e.g. one or two, hetero atoms, such as silicon, germanium and/or oxygen atom(s), e.g. $-SiR^2{}_2-$, wherein each $R^2$ is independently $C_1$-$C_{20}$-alkyl, $C_{3-12}$-cycloalkyl, $C_6$-$C_{20}$-aryl or tri($C_1$-$C_{20}$-alkyl)silyl- residue, such as trimethylsilyl;

M is a transition metal of Group 4, e.g. Ti, Zr or Hf, especially Zr or Hf;

each X is independently a sigma-ligand, such as H, halogen, $C_1$-$C_{20}$-alkyl, $C_1$-$C_{20}$-alkoxy, $C_2$-$C_{20}$-alkenyl, $C_2$-$C_{20}$-alkynyl, $C_3$-$C_{12}$-cycloalkyl, $C_6$-$C_{20}$-aryl, $C_6$-$C_{20}$-aryloxy, $C_7$-$C_{20}$-arylalkyl, $C_7$-$C_{20}$-arylalkenyl, -SR", -PR"$_3$, -SiR"$_3$, -OSiR"$_3$, -NR"$_2$ or -$CH_2$-Y, wherein Y is $C_6$-$C_{20}$-aryl, $C_6$-$C_{20}$-heteroaryl, $C_1$-$C_{20}$-alkoxy,$C_6$-$C_{20}$-aryloxy, NR"$_2$, -SR", -PR"$_3$, -SiR"$_3$, or-OSiR"$_3$;

each of the above mentioned ring moieties alone or as a part of another moiety as the substituent for Cp, X, R" or $R^2$ can further be substituted e.g. with $C_1$-$C_{20}$-alkyl which may contain Si and/or O atoms;

n is 0 or 1.

Suitably, in each X as -$CH_2$-Y, each Y is independently selected from $C_6$-$C_{20}$-aryl, NR"$_2$, - SiR"$_3$ or -OSiR"$_3$. Most preferably, X as -$CH_2$-Y is benzyl. Each X other than -$CH_2$-Y is independently halogen, $C_1$-$C_{20}$-alkyl, $C_1$-$C_{20}$-alkoxy,$C_6$-$C_{20}$-aryl, $C_7$-$C_{20}$-arylalkenyl or -NR"$_2$ as defined above, e.g. -N($C_1$-$C_{20}$-alkyl)$_2$.

Preferably, each X is halogen, methyl, phenyl or -$CH_2$-Y, and each Y is independently as defined above.

Cp is preferably cyclopentadienyl, indenyl, tetrahydroindenyl or fluorenyl, optionally substituted as defined above. More preferably Cp is a cyclopentadienyl or indenyl.

In a suitable subgroup of the compounds of formula (I), each Cp independently bears 1, 2, 3 or 4 substituents as defined above, preferably 1, 2 or 3, such as 1 or 2 substituents, which are preferably selected from $C_1$-$C_{20}$-alkyl, $C_6$-$C_{20}$-aryl, $C_7$-$C_{20}$-arylalkyl (wherein the aryl ring alone or as a part of a further moiety may further be substituted as indicated above), - OSiR"$_3$, wherein R" is as indicated above, preferably $C_1$-$C_{20}$-alkyl.

R, if present, is preferably a methylene, ethylene or a silyl bridge, whereby the silyl can be substituted as defined above, e.g. a (dimethyl)Si=, (methylphenyl)Si=, (methylcyclohexyl)silyl= or (trimethylsilylmethyl)Si=;
n is 0 or 1.

Preferably, R" is other than hydrogen.

A specific subgroup includes the well known metallocenes of Zr, Hf and Ti with two eta5-ligands which may be bridged or unbridged cyclopentadienyl ligands optionally substituted with e.g. siloxy, or alkyl (e.g. C1-6-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or -$SiMe_2$. The preparation of the metallocenes can be carried out according or analogously to the methods known from the literature and is within skills of a person skilled in the field. Thus for the preparation see e.g. EP-A-129 368, examples of compounds wherein the metal atom bears a -NR"$_2$ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

To form a catalyst, a cocatalyst is used as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The metallocene catalysed multimodal copolymer (P) may contain further polymer components and optionally additives and/or fillers. In case the metallocene catalysed multimodal copolymer (P) contains further polymer components, then the amount of the further polymer component(s) typically varies between 3.0 to 20.0 wt% based on the combined amount of the metallocene catalysed multimodal copolymer (P) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in so-called master batch, which comprises the respective additive(s) together with a carrier polymer. In such case the carrier polymer is not calculated to the polymer components of the metallocene catalysed multimodal copolymer (P), but to the amount of the respective additive(s), based on the total amount of polymer composition (100wt%).

**Film of the invention**

The film of the invention comprises at least one layer comprising the metallocene catalysed multimodal copolymer (P). The film can be a monolayer film comprising the metallocene catalysed multimodal copolymer (P) or a multilayer film, wherein at least one layer comprises the metallocene catalysed multimodal copolymer (P). The terms "monolayer film" and multilayer film" have well known meanings in the art.

The layer of the monolayer or multilayer film of the invention may consist of the metallocene catalysed multimodal copolymer (P) as such or of a blend of the metallocene catalysed multimodal copolymer (P) together with further polymer(s). In case of blends, any further polymer is different from the metallocene catalysed multimodal copolymer (P) and is preferably a polyolefin. Part of the above mentioned additives, like processing aids, can optionally added to the metallocene catalysed multimodal copolymer (P) during the film preparation process.

Preferably, the at least one layer of the invention comprises at least 50 wt% up to 100 wt%, more preferably at least 60 wt% up to 100 wt%, even more preferably at least 70 wt% up to 100 wt%, yet more preferably at least 80 wt% up to 100 wt%, of the metallocene catalysed multimodal copolymer (P) of the invention. Most preferably said at least one layer of the film of invention consists of the metallocene catalysed multimodal copolymer (P).

The metallocene catalysed multimodal copolymer (P) of the at least one layer of the invention may also be combined with other polymer components, e.g. low density polyethylene (LDPE), preferably a low density polyethylene produced in a high pressure process.

The LDPE preferably has a density (ISO1183) in the range of 910 to 940 kg/m3, more preferably in the range of 915 to 935 kg/m3, still more preferably in the range of 918 to 930 kg/m3.

Further it is preferred that the LDPE has a melt flow rate MFR2 (ISO1133, 2.16 kg, 190°C) in the range of from 0.05 to 2.0 g/10min, more preferably in the range of from 0.10 to 1.8 g/10min, and even more preferably in the range of from 0.15 to 1.5 g/10 min.

In case such an LDPE is added, the metallocene catalysed polyethylene polymer is combined with 0.0 to 20.0 wt%, preferably 5.0 to 18.0 wt% and more preferably 8.0 to 15.0 wt%, of a low density polyethylene (LDPE).

Accordingly, the films of the present invention may comprise a single layer (i.e. monolayer) or may be multilayered. Multilayer films typically, and preferably, comprise at least 3 layers.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or biaxially orientation, wherein mono-axial orientation is preferred.

In another preferred embodiment, the films are unoriented.

The resulting films may have any thickness conventional in the art. The thickness of the film is not critical and depends on the end use. Thus, films may have a thickness of, for example, 300 μm or less, typically 6 to 200 μm, preferably 10 to 180 μm, e.g. 20 to 150 μm or 20 to 120 μm. If desired, the polymer of the invention enables thicknesses of less than 100 μm, e.g. less than 50 μm. Films of the invention with thickness even less than 20 μm can also be produced whilst maintaining good mechanical properties.

Furthermore, the present invention is also directed to the use of the inventive article as packing material, in particular as a packing material for food and/or medical products.

In an embodiment, the films comprising the metallocene catalysed multimodal copolymer (P) are characterized by a dart-drop impact strength (DDI) determined according to ASTM D1709, method A on a 40 μm monolayer test blown film of at least 900 g up to 1700 g, preferably in the range of 950 g up to 1600 g and more preferably 1000 g up to 1500 g.

In a further embodiment, the films comprising the metallocene catalysed multimodal copolymer (P) may have a tensile modulus determined according to ISO 527 at 23°C on a 40 μm monolayer test blown film in machine direction as well as in transverse direction in the range of from 100 to 500 MPa, preferably of from 150 to 400 MPa, and more preferably of from 180 to 300 M Pa.

In another embodiment, the films comprising the metallocene catalysed multimodal copolymer (P) may have a haze (measured on a 40 μm monolayer test blown film according to ASTM D 1003-00) of below 20 %, preferably between 2 % and 15 %, more preferable between 5 % and 12 %.

Thus, in a preferred embodiment, the films comprising the metallocene catalysed multimodal copolymer (P) are characterized by having at least

a) a dart-drop impact strength (DDI) determined according to ASTM D1709, method A on a 40 μm monolayer test blown film of at least 900 g up to 1700 g, preferably in the range of 950 g up to 1600 g and more preferably 1000 g up to 1500 g,

and one or both of the following properties b) and c)

b) a tensile modulus determined according to ISO 527 at 23°C on a 40 μm monolayer test blown film in machine direction as well as in transverse direction in the range of from 100 to 500 MPa, preferably of from 150 to 400 MPa, and more preferably of from 180 to 300 MPa

c) a haze (measured on a 40 μm monolayer test blown film according to ASTM D 1003-00) of below 20 %, preferably between 2 % and 15 %, more preferable between 5 % and 12 %.

The advantageous nature of the blown film according to the present invention can be understood when considering the optomechanical ability (OMA) with respect to machine direction (MD) usually determined on 40 μm thick test film, with OMA (for 40 μm thick film) being

$$OMA = \frac{Tensile\ Modulus\ (MD)[MPa] * DDI(g)}{Haze\ (40\ \mu m)[\%]}$$

whereby tensile modulus in machine direction is determined according to ISO 527 at 23°C; and whereby DDI is measured according to ASTM D1709, method A, and whereby haze is determined according to ASTM D1003-00 on a test film having a thickness of 40 μm.

The optomechanical ability (OMA) of the inventive film is at least 12000, preferably 15000, more preferably at least 17000.

It shall be mentioned that film thickness is not limited to 40 μm. A 40 μm thick film is merely used as a test specimen for easier comparison.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

**Density**

Density of the polymer was measured according to ASTM; D792, Method B (density by balance at 23°C) on compression moulded specimen prepared according to EN ISO 1872-2 (February 2007) and is given in $kg/m^3$.

**Haze**

Haze was determined according to ASTM D 1003-00 on films as produced indicated below.

**Tensile Modulus**

Tensile modulus in machine and transverse direction were determined according to ISO 527-3 at 23°C on the films as produced indicated below. Testing was performed at a cross head speed of 1 mm/min.

**Dart drop strength (DDI)**

Dart-drop was measured using ASTM D1709, method A (Alternative Testing Technique) from the films as produced indicated below. A dart with a 38 mm diameter hemispherical head was dropped from a height of 0.66 m onto a multilayer film clamped over a hole. Successive sets of twenty specimens were tested. One weight was used for each set and the weight was increased (or decreased) from set to set by uniform increments. The weight resulting in failure of 50 % of the specimens was calculated and reported.

**Film sample preparation**

The test films consisting of the inventive multimodal copolymer (P) and respective comparative polymers of 40 μm thickness, were prepared using a Collin 30 lab scale mono layer blown film line.
The film samples were produced with an average thickness of 40 μm, with a 1:2.5 blow-up ratio, frostline distance of 120 mm, and melt temperature 194°C.

**Experimental part**

**Preparation of examples**

**Cat.Example: Catalyst preparation**

130 grams of a metallocene complex bis(1-methyl-3-n-butylcyclopentadienyl) zirconium (IV) dichloride (CAS no. 151840-68-5), and 9.67 kg of a 30% solution of commercial methylalumoxane (MAO) in toluene were combined and 3.18 kg dry, purified toluene was added. The thus obtained complex solution was added onto 17 kg silica carrier Sylopol 55 SJ (supplied by Grace) by very slow uniform spraying over 2 hours. The temperature was kept below 30°C. The mixture was allowed to react for 3 hours after complex addition at 30°C.

**Polymerization: Inventive Examples: Inventive multimodal copolymer (P) of ethylene with 1-butene and 1-hexene comonomers**

Borstar pilot plant with a 3-reactor set-up (loop1 - loop2 - GPR 1) and a prepolymerization loop reactor.
The inventive multimodal copolymers (P) of example 1 to example 3 (IE1, IE2 and IE3) as well as of the comparative examples (CE1 to CE4) were produced by using the polymerization conditions as given in table 1.

Table 1: Polymerization conditions

| | IE1 | IE2 | IE3 | CE1 | CE2 | CE3 | CE4 |
|---|---|---|---|---|---|---|---|
| **Prepoly reactor** | | | | | | | |
| Catalyst feed (g/h) | 27 | 27 | 25 | 25 | 27 | 20 | 15 |
| Temp. (°C) | 50 | 50 | 50 | 50 | 50 | 50 | 50 |
| Press. (kPa) | 5762 | 5741 | 5701 | 5752 | 5689 | 5699 | 5667 |
| C2 (kg/h) | 4.00 | 4.00 | 4.00 | 4.0 | 4.0 | 4.0 | 4.0 |
| C4 (g/h) | 151.39 | 153.81 | 151.89 | 153 | 178.5 | 175.0 | 175.1 |
| H2 (g/h) | 0.03 | 0.04 | 0.02 | 0.04 | 0.04 | 0.04 | 0.04 |
| Split (wt%) | 3.2 | 3.3 | 3.0 | 3.1 | 2.9 | 2.4 | 2.7 |
| **loop 1** | | | | | | | |
| Temp. (°C) | 85 | 85 | 85 | 85 | 85 | 85 | 85 |
| Press. (kPa) | 5547 | 5546 | 5543 | 5552 | 5542 | 5536 | 5525 |
| C2 conc. (mol%) | 2.11 | 3.70 | 3.44 | 2.1 | 3.8 | 3.8 | 3.0 |
| H2/C2 ratio (mol/kmol) | 0.20 | 0.12 | 0.13 | 0.2 | 0.12 | 0.16 | 0.22 |
| C4/C2 ratio (mol/kmol) | 220.79 | 30.35 | 28.14 | 265.0 | 47.3 | 34.6 | 177.8 |
| Split (wt%) | 15.5 | 16.5 | 16.0 | 14.9 | 19.7 | 15.6 | 17.1 |
| $MFR_2$ (g/10 min) of loop 1 material ($MFR_2$ of fraction (A-1)) | 1.7 | 0.56 | 1.37 | 1.1 | 0.5 | 0.4 | 0.53 |
| Density (kg/m3) of loop 1 material (Density of fraction (A-1)) | 930 | 940 | 941 | 928 | 935 | 936 | 927 |
| **loop 2** | | | | | | | |
| Temp. (°C) | 85 | 85 | 85 | 85 | 85 | 85 | 85 |
| Press. (kPa) | 5347 | 5356 | 5350 | 5349 | 5352 | 5347 | 5332 |
| C2 conc. (mol%) | 1.67 | 2.38 | 2.16 | 1.7 | 3.4 | 3.9 | 2.4 |
| H2/C2 ratio (mol/kmol) | 0.35 | 0.36 | 0.39 | 0.4 | 0.05 | 0.03 | 0.5 |
| C4/C2 ratio (mol/kmol) | 135.08 | 322.32 | 318.13 | 141 | 93 | 57 | 124 |
| Split (wt%) | 16.7 | 20.2 | 19.2 | 16.3 | 19.3 | 16.3 | 19.3 |
| $MFR_2$ (g/10 min) after loop 2 $MFR_2$ ($MFR_2$ of Component (A)) | 8.2 | 8.8 | 10.8 | 8.0 | 1.1 | 1.1 | 4.9 |
| Density (kg/m3) after loop 2 (Density of Component (A)) | 939 | 941 | 941 | 938 | 936 | 939 | 938 |
| $MFR_2$ (g/10 min) of loop 2 material ($MFR_2$ of fraction (A-2)) | 47 | 130 | 83 | 69 | 2.8 | 3.5 | 45 |
| Density (kg/m3) of loop 2 material (Density of fraction (A-2)) | 950 | 943 | 941 | 950 | 936 | 942 | 950 |
| **GPR** | | | | | | | |
| Temp. (°C) | 75 | 75 | 75 | 75 | 75 | 75 | 75 |
| Press. (kPa) | 2000 | 2000 | 2000 | 2000 | 2000 | 2000 | 2000 |
| H2/C2 ratio (mol/kmol) | 0.20 | 0.17 | 0.22 | 0.26 | 0.21 | 0.18 | 0.15 |
| C6/C2 ratio (mol/kmol) | 24.70 | 30.72 | 27.87 | 24.23 | 28.21 | 25.45 | 26.09 |
| Split (wt%) | 64.6 | 60.0 | 61.8 | 65.8 | 58.1 | 65.7 | 60.9 |
| $MFR_2$ (g/10 min) of GPR material ($MFR_2$ of Component (B)) | 0.37 | 0.38 | 0.34 | 0.83 | 0.9 | 0.7 | 0.36 |

| | | | | | | | |
|---|---|---|---|---|---|---|---|
| Density (kg/m3) of GPR material (Density of Component (B)) | 904 | 901 | 902 | 904 | 902 | 907 | 904 |

The polymers were mixed with 2400 ppm of Irganox B561 and 270 ppm of Dynamar FX 5922, compounded and extruded under nitrogen atmosphere to pellets by using a JSW extruder with a melt temperature of ~ 200 °C and a throughput rate of ~220 kg/h.

Table 2: Material properties of inventive multimodal copolymer (P) and comparative copolymers, as well as film parameters

| **Material** | **IE1** | **IE2** | **IE3** | **CE1** | **CE2** | **CE3** | **CE4** |
|---|---|---|---|---|---|---|---|
| $MFR_2$ (g/10min) $MFR_2$ (final) | 1.1 | 1.1 | 1.2 | 1.8 | 1.0 | 0.8 | 1.0 |
| Density (kg/m$^3$) | 918 | 917 | 917 | 917 | 918 | 918 | 918 |
| $MFR_2$ (A)/$MFR_2$ (final) | 7.3 | 7.8 | 8.7 | 4.4 | 1.1 | 1.3 | 4.9 |
| **Film Properties** | | | | | | | |
| Tensile MD [MPa] | 192.8 | 182.6 | 184.0 | 178.7 | 174.9 | 198.2 | 196.2 |
| Tensile TD [MPa] | 205.2 | 210.0 | 199.1 | 183.5 | 195.7 | 238.7 | 221.6 |
| DDI [g] | 1114 | 1050 | 1308 | 635 | 510 | 540 | 550 |
| Haze [%] | 7.39 | 10.45 | 9.48 | 10.44 | 8.38 | 9.08 | 9.95 |
| OMA | 29063 | 18347 | 25387 | 10869 | 10644 | 11787 | 10845 |

From the above table it can be clearly seen, that films consisting of the inventive multimodal copolymer (P) show an improved dart drop strength compared to the comparative examples.

Furthermore, such films have an improved overall performance, i.e. high OMA.

## Claims

**1.** A metallocene catalysed multimodal copolymer (P) of ethylene with at least two different comonomers selected from alpha-olefins having from 4 to 10 carbon atoms, which consists of

(i) 30.0 to 70.0 wt%, based on the multimodal copolymer (P), of an ethylene polymer component (A), comprising ethylene polymer fraction (A-1) and ethylene polymer fraction (A-2) and
(ii) 70.0 to 30.0 wt%, based on the multimodal copolymer (P), of an ethylene polymer component (B),
whereby the ethylene polymer component (A) has
a density in the range of from 920 to 950 kg/m$^3$ and an $MFR_2$ (190°C, 2.16 kg, ISO 1133) in the range of from 2.0 to 40.0 g/10 min;
the ethylene polymer fraction (A-1) has
a density in the range of from 928 to 945 kg/m$^3$ and an $MFR_2$ (190°C, 2.16 kg, ISO 1133) in the range of from 0.1 to 5.0 g/10 min;
the ethylene polymer fraction (A-2) having a density in the range of from 935 to 952 kg/m$^3$
and an $MFR_2$ and (190°C, 2.16 kg, ISO 1133) in the range of from 3.0 to 200.0 g/10 min; and
the ethylene polymer component (B) has

- a density in the range of from 880 to 915 kg/m$^3$ and an $MFR_2$ (190°C, 2.16 kg, ISO 1133) in the range of from 0.01 to 1.0 g/10 min; and

whereby the multimodal copolymer (P) has

- a density in the range of from 910 to 930 kg/m$^3$ and an $MFR_2$ (190°C, 2.16 kg, ISO 1133) in the range of from 1.0 to 2.0 g/10 min and

• a ratio of the $MFR_2$ of ethylene polymer component (A) to the $MFR_2$ of the multimodal copolymer (P) of 5.5 up to 15.0.

**2.** The metallocene catalysed multimodal copolymer (P) according to claim 1, wherein the $MFR_2$ of the ethylene polymer fractions (A-1) and (A-2) are different from each other and ethylene polymer fractions (A-2) preferably has a higher $MFR_2$ than ethylene polymer fractions (A-1).

**3.** The metallocene catalysed multimodal copolymer (P) according to claim 1 or 2, wherein

- the ethylene polymer fraction (A-1) preferably has a $MFR_2$ of 0.2 to 4.0 g/10 min, more preferably of 0.3 to 3.0 g/10 min and even more preferably of 0.4 to 2.0 g/10 min; and/or
- the ethylene polymer fraction (A-2) preferably has a $MFR_2$ of 10.0 to 180.0 g/10 min, more preferably of 20.0 to 150.0 g/10 min, like 30.0 to 140.0 g/10 min; and/or
- the ethylene polymer component (A) preferably has a $MFR_2$ of 3.0 to 30 g/10 min, more preferably of 4.0 to 20 g/10 min, even more preferably of 5.0 to 15 g/10 min, like 7.0 to 12.0 g/10 min and/or
- the ethylene polymer component (B) preferably has a $MFR_2$ of 0.05 to 0.80 g/10 min, more preferably of 0.08 to 0.50 g/10 min and even more preferably of 0.10 to 0.40 g/10 min.

**4.** The metallocene catalysed multimodal copolymer (P) according to any of the preceding claims, wherein the ratio of the $MFR_2$ of ethylene polymer component (A) to the $MFR_2$ of the final metallocene-catalysed multimodal copolymer (P) is of 6.0 to 12.0 and more preferably of 6.5 to 10.0.

**5.** The metallocene catalysed multimodal copolymer (P) according to any of the preceding claims 2 to 4, wherein

- the ethylene polymer fraction (A-1) preferably has a density in the range of from 930 $kg/m^3$ to 943 $kg/m^3$; and/or
- the ethylene polymer fraction (A-2) has a density in the range of from 940 $kg/m^3$ to 950 $kg/m^3$; and/or
- the density of the ethylene polymer component (A) preferably is in the range of from 930 to 945 $kg/m^3$ and/or
- the density of the ethylene polymer component (B) preferably is in the range of from 890 $kg/m^3$ to 905 $kg/m^3$.

**6.** The metallocene catalysed multimodal copolymer (P) according to any of the preceding claims, wherein the ethylene polymer component (A) is preferably present in an amount of 31.0 to 60.0 wt% based on the multimodal copolymer (P), more preferably in an amount of 32.0 to 48.0 wt% based on the multimodal copolymer (P), and
the ethylene polymer component (B) is preferably present in an amount of 69.0 to 40.0 wt% based on the multimodal copolymer (P), and more preferably in an amount of 68.0 to 52.0 wt% based on the multimodal copolymer (P).

**7.** The metallocene catalysed multimodal copolymer (P) according to any of the preceding claims, wherein the alpha-olefin comonomer having from 4 to 10 carbon atoms are preferably 1-butene and 1-hexene.

**8.** The metallocene catalysed multimodal copolymer (P) according to claim 7, wherein the alpha-olefin comonomer of ethylene polymer component (A) is 1-butene and the alpha-olefin comonomer of ethylene polymer component (B) is 1-hexene.

**9.** Film comprising a metallocene catalysed multimodal copolymer (P) according to any of the preceding claims 1 to 8.

**10.** Film according to claim 9, wherein the film comprises at least one layer comprising the metallocene catalysed multimodal copolymer (P), whereby the at least one layer of the comprises at least 50 wt% up to 100 wt%, more preferably at least 60 wt% up to 100 wt%, even more preferably at least 70 wt% up to 100 wt%, yet more preferably at least 80 wt% up to 100 wt%, of the metallocene catalysed multimodal copolymer (P) according to any of the preceding claims 1 to 8.

**11.** Film according to claim 10, wherein the at least one layer consists of the metallocene catalysed multimodal copolymer (P) according to any of the preceding claims 1 to 8.

**12.** Film according to any of the preceding claims 9 to 11, wherein the film is **characterized by** a dart-drop impact strength (DDI) determined according to ASTM D1709, method A on a 40 $\mu$m monolayer test blown film of at least 900 g up to 1700 g, preferably in the range of 950 g up to 1600 g and more preferably 1000 g up to 1500 g.

**13.** Films according to any of the preceding claims 9 to 11, wherein the film may have a tensile modulus determined

according to ISO 527 at23°C on a 40 μm monolayer test blown film in machine direction as well as in transverse direction in the range of from 100 to 500 MPa, preferably of from 150 to 400 MPa, and more preferably of from 180 to 300 MPa.

**14.** Film according any of the preceding claims 9 to 13, wherein the film is **characterized by** having at least

a) a dart-drop impact strength (DDI) determined according to ASTM D1709, method A on a 40 μm monolayer test blown film of at least 900 g up to 1700 g, preferably in the range of 950 g up to 1600 g and more preferably 1000 g up to 1500 g and one or both of the following properties b) and c)
b) a tensile modulus determined according to ISO 527 at 23°C on a 40 μm monolayer test blown film in machine direction as well as in transverse direction in the range of from 100 to 500 MPa, preferably of from 150 to 400 MPa, and more preferably of from 180 to 300 MPa
c) a haze (measured on a 40 μm monolayer test blown film according to ASTM D 1003-00) of below 20 %, preferably between 2 % and 15 %, more preferable between 5 % and 12 %.

**15.** Use of a film according to any of the preceding claims 9 to 14, as packing material, in particular as a packing material for food and/or medical products.

## Patentansprüche

**1.** Metallocen-katalysiertes multimodales Copolymer (P) von Ethylen mit wenigstens zwei verschiedenen Comonomeren, die aus Alpha-Olefinen mit 4 bis 10 Kohlenstoffatomen ausgewählt sind, bestehend aus:

(i) 30,0 bis 70,0 Gew.-%, basierend auf dem multimodalen Copolymer (P), einer Ethylenpolymerkomponente (A), die eine Ethylenpolymerfraktion (A-1) und eine Ethylenpolymerfraktion (A-2) umfasst, und
(ii) 70,0 bis 30,0 Gew.-%, basierend auf dem multimodalen Copolymer (P) einer Ethylenpolymerkomponente (B),
wobei die Ethylenpolymerkomponente (A) aufweist:
eine Dichte im Bereich von 920 bis 950 kg/m$^3$ und eine Schmelzflussrate $MFR_2$ (190°C, 2,16 kg, ISO 1133) im Bereich von 2,0 bis 40,0 g/10 min,
wobei die Ethylenpolymerfraktion (A-1) aufweist:

eine Dichte im Bereich von 928 bis 945 kg/m$^3$ und eine Schmelzflussrate $MFR_2$ (190°C, 2,16 kg, ISO 1133) im Bereich von 0,1 bis 5,0 g/10 min,
wobei die Ethylenpolymerfraktion (A-2) eine Dichte im Bereich von 935 bis 952 kg/m$^3$ und eine Schmelzflussrate $MFR_2$ (190°C, 2,16 kg, ISO 1133) im Bereich von 3,0 bis 200,0 g/10 min aufweist, und
wobei die Ethylenpolymerkomponente (B) aufweist:
eine Dichte im Bereich von 880 bis 915 kg/m$^3$ und eine Schmelzflussrate $MFR_2$ (190°C, 2,16 kg, ISO 1133) im Bereich von 0,01 bis 1,0 g/10 min, und
wobei das multimodale Copolymer (P) aufweist:

eine Dichte im Bereich von 910 bis 930 kg/m$^3$ und eine Schmelzflussrate $MFR_2$ (190°C, 2,16 kg, ISO 1133) im Bereich von 1,0 bis 2,0 g/10 min, und
ein Verhältnis zwischen der Schmelzflussrate $MFR_2$ der Ethylenpolymerkomponente (A) zu der Schmelzflussrate $MFR_2$ des multimodalen Copolymers (P) von 5,5 bis 15,0.

**2.** Metallocen-katalysiertes multimodales Copolymer (P) nach Anspruch 1, wobei die Schmelzflussrate $MFR_2$ der Ethylenpolymerfraktionen (A-1) und (A-2) voneinander verschieden sind und die Ethylenpolymerfraktion (A-2) vorzugweise eine höhere Schmelzflussrate $MFR_2$ als die Ethylenpolymerfraktion (A-1) aufweist.

**3.** Metallocen-katalysiertes multimodales Copolymer (P) nach Anspruch 1 oder 2, wobei:

- die Ethylenpolymerfraktion (A-1) vorzugsweise eine Schmelzflussrate $MFR_2$ von 0,2 bis 4,0 g/10 min, noch besser von 0,3 bis 3,0 g/10 min und noch besser von 0,4 bis 2,0 g/10 min aufweist, und/oder
- die Ethylenpolymerfraktion (A-2) vorzugsweise eine Schmelzflussrate $MFR_2$ von 10,0 bis 180,0 g/10 min und noch besser von 20,0 bis 150,0 g/10 min wie etwa 30,0 bis 140,0 g/10 min aufweist, und/oder
- die Ethylenpolymerkomponente (A) vorzugsweise eine Schmelzflussrate $MFR_2$ von 3,0 bis 30 g/10 min, noch besser von 4,0 bis 20 g/10 min und noch besser von 5,0 bis 15 g/10 min wie etwa 7,0 bis 12,0 g/10 min aufweist,

und/oder
- die Ethylenpolymerkomponente (B) vorzugsweise eine Schmelzflussrate $MFR_2$ von 0,05 bis 0,80 g/10 min, noch besser von 0,08 bis 0,50 g/10 min und noch besser von 0,10 bis 0,40 g/10 min aufweist.

**4.** Metallocen-katalysiertes multimodales Copolymer (P) nach einem der vorstehenden Ansprüche, wobei das Verhältnis zwischen der Schmelzflussrate $MFR_2$ der Ethylenpolymerkomponente (A) und der Schmelzflussrate $MFR_2$ des Metallocen-katalysierten multimodalen Copolymers (P) von 6,0 bis 12,0 und vorzugsweise von 6,5 bis 10,0 beträgt.

**5.** Metallocen-katalysiertes multimodales Copolymer (P) nach einem der Ansprüche 2 bis 4, wobei:

- die Ethylenpolymerfraktion (A-1) vorzugsweise eine Dichte im Bereich von 930 kg/m$^3$ bis 943 kg/m$^3$ aufweist, und/oder
- die Ethylenpolymerfraktion (A-2) eine Dichte im Bereich von 940 kg/m$^3$ bis 950 kg/m$^3$ aufweist, und/oder
- die Dichte der Ethylenpolymerkomponente (A) vorzugsweise im Bereich von 930 bis 945 kg/m$^3$ liegt, und/oder
- die Dichte der Ethylenpolymerkomponente (B) vorzugsweise im Bereich von 890 kg/m$^3$ bis 905 kg/m$^3$ liegt.

**6.** Metallocen-katalysiertes multimodales Copolymer (P) nach einem der vorstehenden Ansprüche, wobei die Ethylenpolymerkomponente (A) vorzugsweise mit einem Anteil von 31,0 bis 60,0 Gew.-% basierend auf dem multimodalen Copolymer (P) und vorzugsweise mit einem Anteil von 32,0 bis 48,0 Gew.-% basierend auf dem multimodalen Copolymer (P) anwesend ist, und
die Ethylenpolymerkomponente (B) vorzugsweise mit einem Anteil von 69,0 bis 40,0 Gew.-% basierend auf dem multimodalen Copolymer (P) und noch besser mit einem Anteil von 68,0 bis 52,0 Gew.-% basierend auf dem multimodalen Copolymer (P) anwesend ist.

**7.** Metallocen-katalysiertes multimodales Copolymer (P) nach einem der vorstehenden Ansprüche, wobei die Alpha-Olefin-Comonomere mit 4 bis 10 Kohlenstoffen vorzugsweise 1-Buten und 1-Hexen sind.

**8.** Metallocen-katalysiertes multimodales Copolymer (P) nach Anspruch 7, wobei das Alpha-Olefin-Comonomer der Ethylenpolymerkomponente (A) 1-Buten ist und das Alpha-Olefin-Comonomer der Ethylenpolymerkomponente (B) 1-Hexen ist.

**9.** Folie, die ein Metallocen-katalysiertes multimodales Copolymer (P) gemäß einem der vorstehenden Ansprüche 1 bis 8 umfasst.

**10.** Folie nach Anspruch 9, wobei die Folie wenigstens eine Schicht umfasst, die das Metallocen-katalysierte multimodale Copolymer (P) umfasst, wobei die wenigstens eine Schicht wenigstens 50 Gew.-% bis 100 Gew.-%, vorzugsweise wenigstens 60 Gew.-% bis 100 Gew.-% und noch besser wenigstens 70 Gew.-% bis 100 Gew.-% und noch besser wenigstens 80 Gew.-% bis 100 Gew.-% des Metallocen-katalysierten multimodalen Copolymers (P) gemäß einem der vorstehenden Ansprüche 1 bis 8 umfasst.

**11.** Folie nach Anspruch 10, wobei die wenigstens eine Schicht aus dem Metallocen-katalysierten multimodalen Copolymer (P) gemäß einem der vorstehenden Ansprüche 1 bis 8 besteht.

**12.** Folie nach einem der vorstehenden Ansprüche 9 bis 11, wobei die Folie durch eine Pfeilfall-Schlagfestigkeit (Dart Drop Impact Strength bzw. DDI), bestimmt gemäß ASTM D1709, Methode A auf einer 40 μm dicken Monoschicht-Testblasfolie, von wenigstens 900 g bis 1700 g, vorzugsweise im Bereich von 950 g bis 1600 g und noch besser von 1000 g bis 1500 g gekennzeichnet ist.

**13.** Folie nach einem der vorstehenden Ansprüche 9 bis 11, wobei die Folie ein Zugmodul, bestimmt gemäß ISO 527 bei 23°C auf einer 40 μm dicken Monoschicht-Testblasfolie in einer Maschinenrichtung und einer Querrichtung, im Bereich von 100 bis 500 MPa, vorzugsweise von 150 bis 400 MPa und noch besser von 180 bis 300 MPa aufweist.

**14.** Folie nach einem der vorstehenden Ansprüche 9 bis 13, wobei die Folie **dadurch gekennzeichnet ist, dass** sie wenigstens Folgendes aufweist:

a) eine Pfeilfall-Schlagfestigkeit (Dart Drop Impact Strength bzw. DDI), bestimmt gemäß ASTM D1709, Methode A auf einer 40 μm dicken Monoschicht-Testblasfolie, von wenigstens 900 g bis 1700 g, vorzugsweise im Bereich

von 950 g bis 1600 g und noch besser von 1000 g bis 1500 g und eine oder beide der folgenden Eigenschaften b) und c),

b) ein Zugmodul, bestimmt gemäß ISO 527 bei 23°C auf einer 40 μm dicken Monoschicht-Testblasfolie in einer Maschinenrichtung und einer Querrichtung, im Bereich von 100 bis 500 MPa, vorzugsweise von 150 bis 400 MPa und noch besser von 180 bis 300 MPa,

c) eine Trübung (gemessen an einer 40 μm dicken Monoschicht-Testblasfolie gemäß ASTM D 1003-00) von unter 20%, vorzugsweise zwischen 2 % und 15 % und noch besser zwischen 5 % und 12 %.

**15.** Verwendung einer Folie gemäß einem der vorstehenden Ansprüche 9 bis 14 als eines Verpackungsmaterials und insbesondere als eines Verpackungsmaterials für Lebensmittel und/oder medizinische Produkte.

## Revendications

**1.** Copolymère multimodal (P) d'éthylène catalysé par métallocène avec au moins deux comonomères différents choisis parmi les alpha-oléfines ayant de 4 à 10 atomes de carbone, qui consiste en

(i) 30,0 à 70,0 % en poids, sur la base du copolymère multimodal (P), d'un composant polymère d'éthylène (A), comprenant une fraction de polymère d'éthylène (A-1) et une fraction de polymère d'éthylène (A-2), et

(ii) 70,0 à 30,0 % en poids, sur la base du copolymère multimodal (P), d'un composant polymère d'éthylène (B),

le composant polymère d'éthylène (A) ayant

une densité dans la plage allant de 920 à 950 kg/$m^3$ et un $MFR_2$ (190 °C, 2,16 kg, ISO 1133) dans la plage allant de 2,0 à 40,0 g/10 min ;

la fraction de polymère d'éthylène (A-1) ayant

une densité dans la plage allant de 928 à 945 kg/$m^3$ et un $MFR_2$ (190 °C, 2,16 kg, ISO 1133) dans la plage allant de 0,1 à 5,0 g/10 min ;

une fraction de polymère d'éthylène (A-2) ayant une densité dans la plage allant

de 935 à 952 kg/$m^3$ et un $MFR_2$ (190 °C, 2,16 kg, ISO 1133) dans la plage allant de 3,0 à 200,0 g/10 min; et

le composant polymère d'éthylène (B) ayant

- une densité dans la plage allant de 880 à 915 kg/$m^3$ et un $MFR_2$ (190 °C, 2,16 kg, ISO 1133) dans la plage allant de 0,01 à 1,0 g/10 min; et

le copolymère multimodal (P) ayant

- une densité dans la plage allant de 910 à 930 kg/$m^3$ et un $MFR_2$ (190 °C, 2,16 kg, ISO 1133) dans la plage allant de 1,0 à 2,0 g/10 min, et
- un rapport entre le $MFR_2$ du composant polymère d'éthylène (A) et le $MFR_2$ du copolymère multimodal (P) de 5,5 jusqu'à 15,0.

**2.** Copolymère multimodal catalysé par métallocène (P) selon la revendication 1, dans lequel le $MFR_2$ des fractions de polymère d'éthylène (A-1) et (A-2) est différent l'un de l'autre et la fraction de polymère d'éthylène (A-2) a de préférence un MFR plus élevé que la fraction de polymère d'éthylène (A-1).

**3.** Copolymère multimodal catalysé par métallocène (P) selon la revendication 1 ou 2, dans lequel

- la fraction de polymère d'éthylène (A-1) a de préférence un $MFR_2$ de 0,2 à 4,0 g/10 min, plus préférentiellement de 0,3 à 3,0 g/10 min et encore plus préférentiellement de 0,4 à 2,0 g/10 min; et/ou
- la fraction de polymère d'éthylène (A-2) a de préférence un $MFR_2$ de 10,0 à 180,0 g/10 min, plus préférentiellement de 20,0 à 150,0 g/10 min, tel que de 30,0 à 140,0 g/10 min; et/ou
- le composant polymère d'éthylène (A) a de préférence un $MFR_2$ de 3,0 à 30 g/10 min, plus préférentiellement de 4,0 à 20 g/10 min et encore plus préférentiellement de 5,0 à 15 g/10 min, tel que 7,0 à 12,0 g/10 min et/ou
- le composant polymère d'éthylène (B) a de préférence un $MFR_2$ de 0,05 à 0,80 g/10 min, plus préférentiellement de 0,08 à 0,50 g/10 min et encore plus préférentiellement de 0,10 à 0,40 g/10 min.

**4.** Copolymère multimodal catalysé par métallocène (P) selon l'une quelconque des revendications précédentes, dans lequel le rapport entre le $MFR_2$ du composant polymère d'éthylène (A) et le $MFR_2$ du copolymère multimodal catalysé par métallocène final (P) est de 6,0 à 12,0 et plus préférentiellement de 6,5 à 10,0.

5. Copolymère multimodal catalysé par métallocène (P) selon l'une quelconque des revendications précédentes 2 à 4, dans lequel

- la fraction de polymère d'éthylène (A-1) a de préférence une densité dans la plage allant de 930 $kg/m^3$ à 943 $kg/m^3$ ; et/ou
- la fraction de polymère d'éthylène (A-2) a une densité dans la plage allant de 940 $kg/m^3$ à 950 $kg/m^3$ ; et/ou
- la densité du composant polymère d'éthylène (A) est préférentiellement dans la plage allant de 930 à 945 $kg/m^3$ ; et/ou
- la densité du composant polymère d'éthylène (B) est préférentiellement dans la plage allant de 890 $kg/m^3$ à 905 $kg/m^3$.

6. Copolymère multimodal catalysé par métallocène (P) selon l'une quelconque des revendications précédentes, dans lequel le composant polymère d'éthylène (A) est préférentiellement présent en une quantité de 31,0 à 60,0 % en poids par rapport au copolymère multimodal (P), plus préférentiellement en une quantité de 32,0 à 48,0 % en poids par rapport au copolymère multimodal (P), et
le composant polymère d'éthylène (B) est préférentiellement présent en une quantité de 69,0 à 40,0 % en poids par rapport au copolymère multimodal (P), et plus préférentiellement en une quantité de 68,0 à 52,0 % en poids par rapport au copolymère multimodal (P).

7. Copolymère multimodal catalysé par métallocène (P) selon l'une quelconque des revendications précédentes, dans lequel le comonomère alpha-oléfine ayant de 4 à 10 atomes de carbone est de préférence le 1-butène et le 1-hexène.

8. Copolymère multimodal catalysé par métallocène (P) selon la revendication 7, dans lequel le comonomère alpha-oléfine du composant polymère d'éthylène (A) est le 1-butène et le comonomère alpha-oléfine du composant polymère d'éthylène (B) est le 1-hexène.

9. Film comprenant un copolymère multimodal catalysé par métallocène (P) selon l'une quelconque des revendications 1 à 8 précédentes.

10. Film selon la revendication 9, dans lequel le film comprend au moins une couche comprenant le copolymère multimodal catalysé par métallocène (P), l'au moins une couche comprenant au moins 50 % en poids jusqu'à 100 % en poids, plus préférentiellement au moins 60 % en poids jusqu'à 100 % en poids, encore plus préférentiellement au moins 70 % en poids jusqu'à 100 % en poids, encore plus préférentiellement au moins 80 % en poids jusqu'à 100 % en poids, du copolymère multimodal catalysé par métallocène (P) selon l'une quelconque des revendications 1 à 8 précédentes.

11. Film selon la revendication 10, dans lequel l'au moins une couche est constituée du copolymère multimodal catalysé par métallocène (P) selon l'une quelconque des revendications 1 à 8 précédentes.

12. Film selon l'une quelconque des revendications 9 à 11 précédentes, dans lequel le film est **caractérisé par** une résistance à l'impact de fléchette tombante (DDI) déterminée selon ASTM D1709, méthode A sur un film soufflé d'essai monocouche de 40 $\mu$m d'au moins 900 g à 1 700 g, préférentiellement dans la plage de 950 g à 1 600 g et plus préférentiellement de 1 000 g à 1 500 g.

13. Films selon l'une quelconque des revendications précédentes 9 à 11, dans lesquels le film peut avoir un module de traction déterminé selon la norme ISO 527 à 23 °C sur un film soufflé d'essai monocouche de 40 $\mu$m dans le sens machine ainsi que dans le sens transversal dans la plage de 100 à 500 MPa, préférentiellement de 150 à 400 MPa, et plus préférentiellement de 180 à 300 MPa.

14. Film selon l'une quelconque des revendications 9 à 13 précédentes, dans lequel le film est **caractérisé en ce qu'**il a au moins

a) une résistance à l'impact de fléchette tombante (DDI) déterminée selon la norme ASTM D1709, méthode A, sur un film soufflé d'essai monocouche de 40 $\mu$m, d'au moins 900 g jusqu'à 1700 g, préférentiellement dans la plage de 950 g à 1 600 g, et plus préférentiellement de 1 000 g à 1 500 g, et une ou les deux des propriétés b) et c) suivantes
b) un module de traction déterminé selon la norme ISO 527 à 23 °C sur un film soufflé d'essai monocouche de 40 $\mu$m dans le sens machine ainsi que dans le sens transversal dans la plage de 100 à 500 MPa, préférentiellement de 150 à 400 MPa, et plus préférentiellement de 180 à 300 MPa
c) un trouble (mesuré sur un film soufflé d'essai monocouche de 40 µm selon ASTM D 1003-00) inférieur à 20 %, préférentiellement compris entre 2 % et 15 %, plus préférentiellement entre 5 % et 12 %.

**15.** Utilisation d'un film selon l'une quelconque des revendications 9 à 14 précédentes comme matériau d'emballage, en particulier comme matériau d'emballage pour des produits alimentaires et/ou médicaux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021009189 A
- WO 2021009190 A
- WO 2021009191 A
- WO 2021009192 A
- WO 2016198273 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A


### Non-patent literature cited in the description


- **HAGSTRÖM.** *The Polymer Processing Society, Europe/Africa Region Meeting, Gothenburg, Sweden,* 19 August 1997
- *CHEMICAL ABSTRACTS,* 151840-68-5